## Europäisches Patentamt

## European Patent Office

## Office européen des brevets

(11) Veröffentlichungsnummer: **0 316 314**
**B1**

(12)   **EUROPÄISCHE PATENTSCHRIFT**

(45) Veröffentlichungstag der Patentschrift: **23.05.90**

(51) Int. Cl.⁵: **B 60 R 21/00, H 02 J 9/06**

(21) Anmeldenummer: **87904503.7**

(22) Anmeldetag: **15.07.87**

(86) Internationale Anmeldenummer:
**PCT/DE87/00320**

(87) Internationale Veröffentlichungsnummer:
**WO 88/00896 11.02.88 Gazette 88/04**

(54) SICHERHEITSEINRICHTUNG FÜR FAHRZEUGINSASSEN.

(30) Priorität: **06.08.86 DE 3626601**

(43) Veröffentlichungstag der Anmeldung:
**24.05.89 Patentblatt 89/21**

(45) Bekanntmachung des Hinweises auf die
Patenterteilung:
**23.05.90 Patentblatt 90/21**

(84) Benannte Vertragsstaaten:
**DE FR GB IT SE**

(56) Entgegenhaltungen:
**DE-A-2 309 111**
**FR-A-2 143 787**
**FR-A-2 267 221**
**US-A-4 528 459**

(73) Patentinhaber: **ROBERT BOSCH GMBH**
**Postfach 50**
**D-7000 Stuttgart 1 (DE)**

(72) Erfinder: **DROBNY, Wolfgang**
**Flurweg 5**
**D-7122 Besigheim (DE)**
Erfinder: **NITSCHKE, Werner**
**Roseggerweg 14**
**D-7257 Ditzingen (DE)**
Erfinder: **TAUFER, Peter**
**Talstr. 45**
**D-7253 Renningen 2 (DE)**
Erfinder: **WELLER, Hugo**
**Mörikestr. 5**
**D-7141 Oberriexingen (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**Beschreibung**

Stand der Technik

Die Erfindung geht aus von einer Sicherheitseinrichtung für Fahrzeuginsassen nach dem Oberbegriff des Anspruchs 1. Bei einer aus der US-PS 3,870,894 bekannten Sicherheitseinrichtung dieser Art dient als Reserve-Energiespeicher ein Kondensator, der beim Einschalten des Stromversorgungsteils aufgeladen wird. Der Reserve-Energiespeicher soll sicherstellen, daß auch bei Ausfall der Betriebsspannung die Funktionsfähigkeit der Sicherheitseinrichtung zumindest noch für eine Zeitlang sichergestellt werden kann. Nachteilig dabei ist, daß der als Reserve-Energiespeicher eingesetzte Kondensator stets nur auf den aktuellen Spannungswert des Stromversorgungsteils aufgeladen werden kann. Bei besonders ungünstigen Betriebsbedingungen, wie beispielsweise zu starke Belastung des Bordspannungsnetzes, kann es daher vorkommen, daß der Reserve-Energiespeicher nur auf einen Spannungswert aufgeladen wird, der für einen zuverlässigen Betrieb der Sicherheitseinrichtung nicht mehr ausreichend ist.

Aus DE-A-2 309 111 ist weiter ein Sicherheitssystem gleicher Gattung bekannt, bei dem ein erster Kondensator als Reserve-Energiespeicher für das zur Betätigung des ersten Rückhaltemittels vorhandene Detonationselement vorgesehen ist. Für das zur Betätigung eines weiteren Rückhaltemittels vorgesehene weitere Detonationselement ist ein getrennter weiterer Kondensator als weiterer Reserve-Energiespeicher vorgesehen.

Vorteile der Erfindung

Die Nachteile der bekannten Sicherheitseinrichtungen werden durch die erfindungsgemäße Sicherheitseinrichtung mit den Merkmalen des Anspruchs 1 vermieden, die den Vorteil hat, daß auch bei nicht optimalen Betriebsbedingungen, insbesondere bei einem starken Abfall der Spannung im Bordspannungsnetz in dem Reserve-Energiespeicher immer noch ein ausreichender Spannungswert zur Verfügung steht, so daß die zum Schutz der Fahrzeuginsassen vorgesehenen Rückhaltemittel zuverlässig betätigt werden konnen.

Als Reserve-Energiespeicher werden gemäß den Merkmalen des Anspruchs 2 Kondensatoren, insbesondere Elektrolytkondensatoren, eingesetzt, da hierdurch bei relativ kleinem Volumen große Kapazitätswerte bereitgestellt werden können. Der für die Energiespeicher erforderliche Raumbedarf wird weiter dadurch vermindert, daß gemäß dem in Anspruch 3 genannten Merkmal die als Energiespeicher vorgesehenen Kondensatoren unterschiedliche Spannungsfestigkeit aufweisen.

Zeichnung

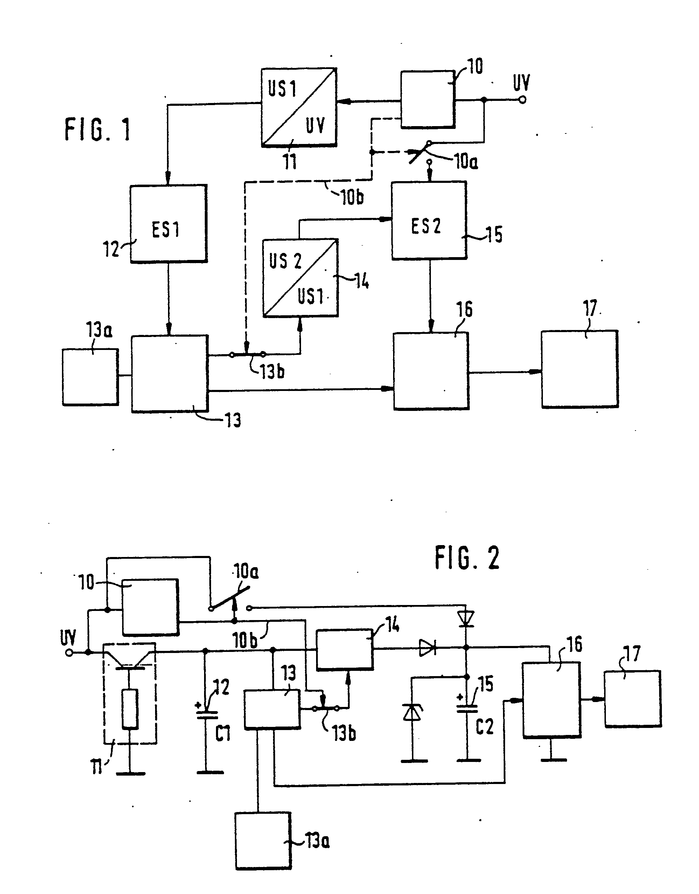

Ein Ausführungsbeispiel der Erfindung ist in der Zeichnung dargestellt und in der nachfolgenden Beschreibung näher erläutert. Es zeigen Figur 1 ein Blockschaltbild der Sicherheitseinrichtung und Figur 2 einen vereinfachten Stromlaufplan mit Darstellung der Reserve-Energiespeicher.

Beschreibung des Ausführungsbeispiels

Mit Bezugsziffer 17 sind zum Schutz der Fahrzeuginsassen vorgesehene Rückhaltemittel bezeichnet, bei denen es sich vorzugsweise um einen Luftsack (Airbag) handelt, der im Notfall durch pyrotechnisch erzeugte Gase aufgeblasen wird und dadurch beispielsweise einen Kopfaufprall des Fahrers auf das Lenkrad verhindert. Die Rückhaltemittel 17 werden durch eine Leistungsendstufen umfassende Ansteuerschaltung 16 betätigt. Die Ansteuerschaltung 16 wiederum wird von einer Sensorschaltung 13 aktiviert, die Signale eines Aufprallsensors 13a auswertet. Als Aufprallsensor wird vorzugsweise ein piezoelektrischer Drucksensor verwendet. Die gesamte Sicherheitseinrichtung ist an das Bordspannungsnetz angeschlossen und wird im Normalfall mit der Betriebsspannung UV versorgt. Um nun auch bei einem Ausfall des Bordspannungsnetzes, etwa durch eine Zerstörung der Leitungsverbindungen im Falle eines Unfalls, die Funktion der Sicherheitseinrichtung zu gewährleisten, sind zwei getrennte Reserve-Energiequellen ES1 und ES2 vorgesehen, wobei ES1 die Sensorauswerteschaltung 13 und den Sensor 13a, ES2 die Ansteuerschaltung 16 mit Spannung versorgt. Vorzugsweise wird dabei der Reserve-Energiespeicher auf eine Spannung aufgeladen, die wesentlich unter der Betriebsspannung UV des Bordspannungsnetzes liegt. Wenn beispielsweise die Versorgungsspannung UV in Kraftfahrzeugen in der Größenordnung von etwa 10—16 Volt liegt, wird der Reserve-Energiespeicher ES1 zweckmäßig auf eine Spannung von etwa 6 Volt aufgeladen. Zu diesem Zweck ist ein Spannungswandler 11 zwischen den Reserve-Energiespeicher 12 und die Versorgungsspannung UV geschaltet, der die Spannung UV auf die niedrigere Spannung US1 umsetzt. Bei im Normalbereich, also zwischen etwa 10 und 16 Volt liegenden Spannungswerten des Bordspannungsnetzes ist auch der die Ansteuerschaltung 16 mit Spannung versorgende zweite Reserve-Energiespeicher 15 (ES2) über den geschlossenen Schalter 10a unmittelbar mit der Versorgungsspannung UV verbunden und wird auf diese Spannung aufgeladen. Zwischen die Versorgungsspannung UV und den Spannungswandler 11 ist weiter eine Spannungsvergleichsschaltung (Komparator 10) eingeschaltet, die ständig die Höhe der anliegenden Versorgungsspannung UV mit einem vorgebbaren Sollwert vergleicht. Sobald die aktuelle Versorgungsspannung UV des Bordspannungsnetzes diesen vorgebbaren Sollwert unterschreitet, wird über einen ersten Schalter 10a der zweite Reserve-Energiespeicher 15 von der Versorgungsspannung UV abgetrennt; weiter wird über die Betätigungsleitung 10b ein zweiter Schalter 13b geschlossen, der eine Verbindung zwischen der Sensorauswerteschaltung 13 und einem zweiten Spannungswandler 14 herstellt, der die in 13 verfügbare Ausgangsspannung des ersten Reserve-Energiespeichers 12 in die Sollspannung US 2 des zweiten Reserve-Energiespeichers 15 umsetzt und diesen damit auflädt. Auf diese Weise ist sichergestellt, daß der zweite Reserve-Energiespeicher 15 auch bei starkem Absinken der Versorgungsspannung UV mit der für eine sichere Betätigung der Sicherheitseinrichtung notwendigen Sollspannung aufgeladen bleibt.

In dem vereinfacht dargestellten Stromlaufplan nach Figur 2 ist zu erkennen, daß als Reserve-Energiespeicher 12, bzw. 15 Elektrolytkondensatoren C1, bzw. C2 verwendet werden. Die Aufteilung in zwei getrennte Energiespeicher bringt den Vorteil, daß die Spannungsfestigkeit der als Energiespeicher verwendeten Elektrolytkondensatoren, die maßgeblich die Abmessungen der Kondensatoren mitbestimmt, genau an die Erfordernisse der Schaltungsanordnung angepaßt werden kann. Dadurch ist es möglich, die für eine bestimmte Zeit geforderte Erhaltung der Funktionsfähigkeit der Sicherheitseinrichtung mit einem Minimum an Platzaufwand zu realisieren, was wiederum der Kompaktheit der Sicherheitseinrichtung zugute kommt. Im Vergleich zum Reserve-Energiespeicher 15 der für eine Betriebsspannung von mindestens ca. 16 Volt ausgelegt werden muß, muß der Reserve-Energiespeicher 12 lediglich für eine Spannungsfestigkeit von ca. 6 Volt ausgelegt sein. Dies hat zur Folge, daß er wesentlich geringere äußere Abmessungen aufweist.

## Patentansprüche

1. Sicherheitseinrichtung für Fahrzeuginsassen mit elektrisch auslösbaren Rückhaltemitteln (17), mit einem Sensor (13a) und einer Sensorauswertsschaltung (13) sowie Ansteuerschaltungen (16) zur Betätigung der Rückhaltemittel (17) und mit einem Reserve-Energiespeicher (12, 15), dadurch gekennzeichnet, daß je ein getrennter Reserve-Energiespeicher (12, 15) für den Sensor (13a) und die Sensorauswerteschaltung (13) (erster Reserve-Energiespeicher (12)) bzw. die Ansteuerschaltungen (16) zur Betätigung der Rückhaltemittel (17) (zweiter Reserve-Energiespeicher (15)) vorgesehen ist, daß der erste Reserve-Energiespeicher (12) über einen Spannungswandler (11) an die Bordspannungsquelle (UV) angeschlossen und auf einen kleineren Spannungswert als die vom Bordspannungsnetz zur Verfügung gestellte Versorgungsspannung aufladbar ist, daß der zweite Reserve-Energiespeicher (15) mit der Bordspannungsquelle (UV) verbunden ist, solange diese ihren Spannungssollwert aufweist, dagegen bei Unterschreiten dss Spannungssollwerts unter einen vorgebbaren Grenzwert mit einer den Spannungssollwert liefernden Spannungsquelle verbindbar ist, und daß als den Spannungssollwert liefernde Spannungsquelle ein von dem ersten Reserve-Energiespeicher (12) gespeister Spannungswandler (14) vorgesehen ist.

2. Sicherheitseinrichtung nach Anspruch 1, dadurch gekennzeichnet, daß als Reserve-Energiespeicher (12, 15) Kondensatoren, insbesondere Elektrolytkondensatoren vorgesehen sind.

3. Sicherheitseinrichtung nach einem der Ansprüche 1 und 2, dadurch gekennzeichnet, daß die Kondensatoren unterschiedliche Spannungsfestigkeit aufweisen.

## Revendications

1. Dispositif de sécurité pour passagers d'une voiture, avec des moyens (17) de retenue pouvant être déclenchés électriquement, avec un détecteur (13a) et un circuit (13) d'exploitation du détecteur, ainsi que des circuits (16) de commande pour l'actionnement des moyens (17) de retenue, et avec un stockage (12, 15) d'énergie, caractérisé en ce qu'il est prévu un stockage séparé (12, 15) d'énergie d'une part pour le détecteur (13a) et le circuit (13) d'exploitation du détecteur (premier réservoir (12) d'énergie), d'autre part, pour les circuits (16) de commande pour l'actionnement des moyens (17) de retenue (second stockage (15) d'énergie), d'une façon telle que le premier stockage (12) d'énergie est relié par l'intermédiaire d'un transformateur (11) de tension à la source de tension (UV) du bord et qui peut être chargé sous une plus faible valeur de tension que la tension d'alimentation installée et disponible pour le réseau de bord, et que le second stockage (15) d'énergie est relié à la source de tension (UV) de bord pendant tout le temps que cette tension présente sa valeur nominale, et au contraire quand cette tension devient inférieure à la valeur nominale de la tension, et en-dessous d'une valeur limite prédéterminée, le stockage (15) d'énergie peut alors être connecté avec une source de tension livrant la valeur nominale de la tension, et que, en tant que source de tension livrant la valeur nominale de la tension, il est prévu un transformateur (14) de tension de réserve du premier stockage (12) d'énergie.

2. Dispositif de sécurité selon la revendication 1, caractérisé en ce que, en tant que stockage (12, 15) d'énergie, il est prévu des condensateurs, en particulier des condensateurs à électrolytes.

3. Dispositif de sécurité selon l'une quelconque des revendications 1 et 2, caractérisé en ce que les condensateurs présentent des valeurs différentes de tension.

## Claims

1. Safety device for motor vehicle occupants with electrically triggerable restraining means (17), having a sensor (13a) and a sensor evaluation circuit (13) as well as drive circuits (16) for actuation of the restraining means (17) and having a reserve energy store (12, 15), characterized in that one separate reserve energy store (12, 15) each is provided for the sensor (13a) and the sensor evaluation circuit (13) (first reserve energy store (12)) or for the drive circuits (16) for actuation of the restraining means (17) (second reserve energy store (15)), in that the first reserve energy store (12) is connected via a voltage transformer (11) to the on-board voltage source (UV) and can be charged to a smaller voltage value than the supply voltage made available by the on-board voltage network, in that the second reserve energy store (15) is connected to the on-board voltage source (UV) provided the latter has its voltage reference value, on the other hand on undershooting the voltage reference value below a certain predeterminable threshhold value it can be connected to a voltage source supplying the voltage reference value, and in that a voltage transformer (14) fed by the first reserve energy store (12) is provided as the voltage source supplying the voltage reference value.

2. Safety device according to Claim 1, characterized in that capacitors, in particular electrolyte capacitors, are provided as reserve energy stores (12, 15).

3. Safety device according to one of Claims 1 and 2, characterized in that the capacitors have different dielectric strengths.

EP 0 316 314 B1

FIG. 1

FIG. 2